# EUROPÄISCHE PATENTSCHRIFT

(11) **EP 2 017 147 B1**
(45) Veröffentlichungstag und Bekanntmachung des Hinweises auf die Patenterteilung: **11.06.2014**
(21) Anmeldenummer: 08010770.9
(22) Anmeldetag: 13.06.2008
(51) Int. Cl.: B60S 13/00, B62D 59/04

(54) **Hilfsantriebseinrichtung für antriebslose Fahrzeuganhänger, insbesondere Caravan-Rangierhilfe**
Auxiliary drive device for driveless vehicle trailers, in particular caravan shunting aid
Dispositif d'entraînement auxiliaire pour remorque de véhicule sans entraînement, en particulier aide au stationnement de caravane

(30) Priorität: 17.07.2007 DE 102007033599
(43) Veröffentlichungstag der Anmeldung: 21.01.2009
(73) Patentinhaber: ebm-papst ZEITLAUF GmbH & Co. KG, 91207 Lauf a. d. Pegnitz (DE)
(72) Erfinder: Obermeyer, Friedrich, 90537 Feucht (DE); Albrecht, Matthias, 90607 Rückersdorf (DE)
(74) Vertreter: Hübner, Gerd

(56) Entgegenhaltungen:
- EP-A1- 1 714 859
- EP-A2- 1 394 024
- EP-A2- 1 840 019

## Beschreibung

Die Erfindung betrifft eine Hilfsantriebseinrichtung für antriebslose Fahrzeuganhänger und insbesondere eine Caravan-Rangierhilfe mit den im Oberbegriff des Patentanspruches 1 angegebenen Merkmalen.

Derartige Rangierhilfen dienen zur Vermeidung des mühseligen Rangierens von schwergewichtigen Wohnanhängern per Hand beispielsweise zur Positionierung des Caravans in seine endgültige Standposition auf einem Campingplatz oder beim Einstellen in ein Winterquartier.

Auf dem Zubehörmarkt für Caravans sind solche Hilfsantriebseinrichtungen verfügbar. Sie weisen bekanntermaßen einen am Anhänger - beispielsweise an dessen Chassis - befestigbaren Träger im Bereich eines Rades auf, an dem ein Lagerschlitten verschiebbar gelagert ist. Auf dem Lagerschlitten sitzt ein Antriebsmotor, der über eine entsprechende Getriebeanordnung eine durch die Schlittenverschiebung zum Anhängerrad zustellbare Reibrolle bei Bedarf antreibt. Damit wird das Rad im Bedarfsfall rotatorisch angetrieben. Derartige Antriebseinrichtungen können dabei einzeln auf jeder Seite eines Caravans dem jeweiligen Rad zugeordnet montiert werden. Es sind allerdings auch Vorrichtungen bekannt, bei denen die beiden Hilfsantriebseinrichtungen für die beiden Räder über einen ausladenden, unterhalb des Anhängerchassis verlaufenden Querträger miteinander verbunden sind.

Bei einer bekannten Hilfsantriebseinrichtung ist der Antriebsmotor über ein Schneckengetriebe mit der Reibrolle verbunden. Die Zustellbewegung des Lagerschlittens wird über ein Kniehebelgestänge bewerkstelligt, das manuell über eine Sechskantwelle mit Hilfe eines Schraubenschlüssels betätigt wird. Der Antriebsmotor selbst wird nach erfolgtem Anschwenken der Reibrolle an das Caravanrad per Fernbedienung aktiviert.

Das Antriebskonzept mit Schneckengetriebe ist konstruktiv relativ aufwändig. Aufgrund der manuellen Betätigung der Kniehebelanordnung lässt diese bekannte Hilfsantriebseinrichtung ferner hinsichtlich ihres Bedienungskomforts zu wünschen übrig.

Zur Behebung dieser Problematik ist es bereits bekannt, den Zustellantrieb des Lagerschlittens ebenfalls motorisch auszuführen. Dazu wird ein zweiter Antriebsmotor an den Träger der Hilfsantriebseinrichtung angeflanscht, der über einen Spindeltrieb auf den Lagerschlitten einwirkt. Beide Motoren können per Fernbedienung angesteuert werden, sodass hiermit ein hoher Bedienungskomfort erzielbar ist. Dieser wird allerdings durch einen hohen konstruktiven Aufwand bedingt durch die zweite Antriebseinheit erkauft.

Bei einem Hilfsantrieb, wie er aus der EP 1 394 024 A2 bekannt ist, ist der Antrieb für die Verschiebung des Lagerschlittens zur Zustellung der Reibrolle an das Anhängerrad von dem einzigen Antriebsmotor über eine zweite, selektiv aktivierbare Getriebeanordnung abgeleitet.

Der Erfindung liegt davon ausgehend die Aufgabe zugrunde, eine Hilfsantriebseinrichtung für antriebslose Fahrzeuganhänger und insbesondere eine Caravan-Rangierhilfe so auszugestalten, dass sie bei Verwendung nur eines Antriebsmotors mit einer zweiten Getriebeanordnung zur Ableitung der Zustellbewegung der Reibrolle einen in der Übersetzung erweiterten Getriebezug aufweist.

Diese Aufgabe wird durch die im Anspruch 1 angegebenen Merkmale gelöst.

Die Erfindung stellt demgemäß eine Hilfsantriebseinrichtung zur Verfügung, bei der die Zustellung der Reibrolle unter Verschiebung des Lagerschlittens motorisch erfolgt, wodurch eine manuelle Betätigung und die damit verbundenen Komforteinbußen vermieden werden. Gleichzeitig braucht kein zweiter Antriebsmotor für diese Zustellbewegung eingebaut zu werden, da Letztere von dem einzigen Antriebsmotor herrührt und über die Aktivierung der zweiten Getriebeanordnung realisiert wird. Der konstruktive Aufwand für diese zweite Getriebeanordnung ist weitaus geringer als derjenige für einen zweiten Antriebsmotor. Darüber hinaus ist eine zweite Getriebeanordnung für die Erzielung eines bestimmten Übersetzungsverhältnisses innerhalb des Antriebes der Hilfsantriebseinrichtung ohnehin von Nöten oder - im Hinblick auf die verwendeten Getriebearten - von Vorteil. So kann beim Erfindungsgegenstand die erste Getriebeanordnung für die Reibrolle als konstruktiv einfaches Stirnradgetriebe ausgeführt sein, die zweite, erfindungsgemäß als Planetengetriebe ausgeführte Getriebeanordnung dient dann nicht nur für die Ableitung des Antriebs des Lagerschlittens, sondern als weitere Übersetzungsstufe innerhalb des Getriebezuges für die Reibrolle.

Bevorzugte Ausführungsformen der Erfindung sind in den abhängigen Ansprüchen angegeben, deren Merkmale, Einzelheiten und Vorteile der nachfolgenden Beschreibung eines Ausführungsbeispiels anhand der beigefügten Zeichnungen entnehmbar sind. Es zeigen:
- Fig. 1: eine perspektivische Ansicht einer Hilfsantriebseinrichtung schräg von vorne in ihrer aktiven Antriebsposition bezüglich eines Caravan-Rades,
- Fig. 2: eine perspektivische Darstellung dieser Hilfsantriebseinrich- tung schräg von hinten,
- Fig. 3: einen Horizontalschnitt der Hilfsantriebseinrichtung in ihrer an ein Caravan-Rad zugestellten aktiven Antriebsposition,
- Fig. 4 und 5: eine Frontansicht der Hilfsantriebseinrichtung in der inakti- ven und aktiven Position bezüglich des Caravan-Rades, und

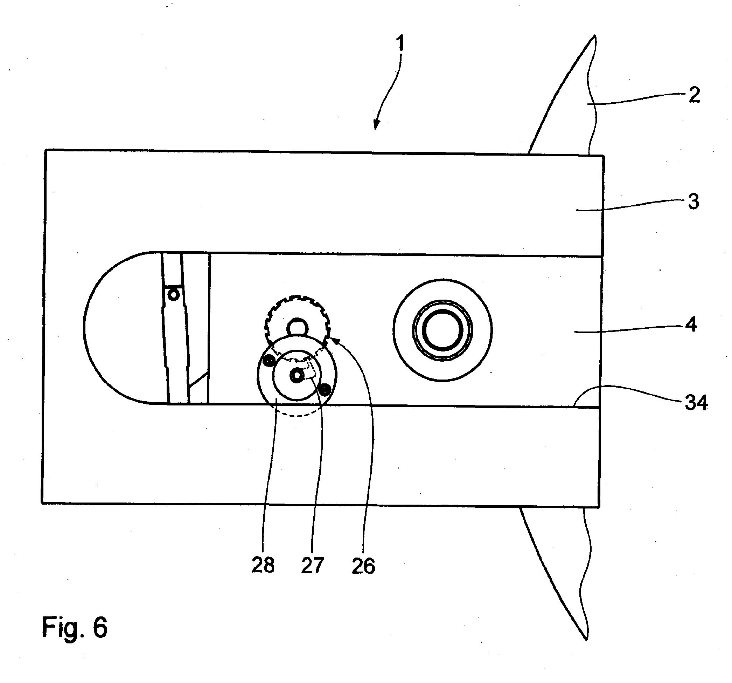

- Fig. 6: eine Rückansicht der Hilfsantriebseinrichtung.

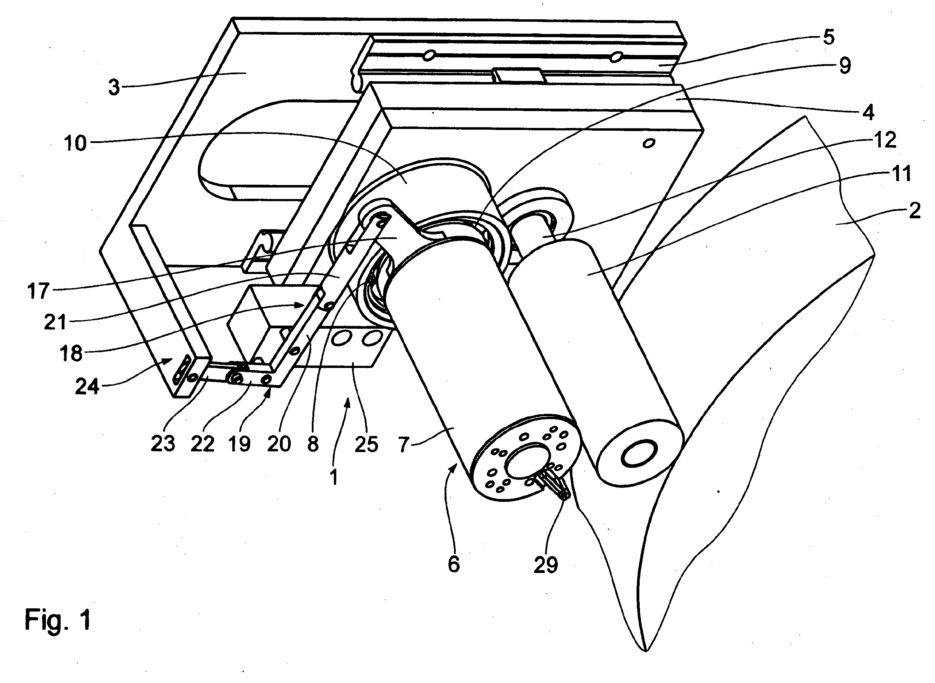

Wie aus Fig. 1 deutlich wird, weist die als Ganzes mit 1 bezeichnete Hilfsantriebseinrichtung für das ausschnittsweise angedeutete Rad 2 eines Caravan-Anhängers einen im Wesentlichen plattenförmigen Träger 3 auf, der an geeigneter Stelle am nicht dargestellten Chassis des Caravans im Bereich des Radkastens montiert wird. Daran ist ein Lagerschlitten 4 über eine geeignete Längsführung 5 radial in Richtung zum Rad 2 verschiebbar gelagert. Der Lagerschlitten 4 trägt einerseits einen Getriebemotor 6, der aus einem Elektromotor 7 und einem direkt daran angeflanschten Planetengetriebe 8 besteht. Der Getriebemotor 7 ist dabei über eine Drehlageranordnung 9 in einem vorspringenden Lagerkragen 10 an dem gehäuseartig ausgebildeten Lagerschlitten 4 um seine zentrale Achse A 1 in noch näher zu erläuternder Weise über einen begrenzten Schwenkwinkel schwenkbar gelagert.

Am Lagerschlitten 4 ist ferner eine Reibrolle 11 über eine Antriebswelle 12 drehbar gelagert. Die Reibrolle 11 wird dabei über ein im Lagerschlitten 4 angeordnetes Stirnradgetriebe 13 in dem Gehäuse 10 angetrieben, dessen Antriebsritzel 14 von der Abtriebswelle 15 des Planetengetriebes 8 angetrieben wird. Das Abtriebsritzel 16 des Stirnradgetriebes 13 ist drehfest mit der Antriebswelle 12 der Reibrolle 11 verbunden. Die Rotationsachse A2 der Reibrolle 11 liegt parallel zur Achse A1 des Getriebemotors 6 und zu der nicht dargestellten zentralen Achse des Caravan-Rades 2.

Wie insbesondere aus den Fig. 1, 4 und 5 hervorgeht, ist an dem als Schwenkeinheit im Lagerschlitten 4 schwenkbar gelagerten Getriebemotor 6 ein Lenker 17 radial bezogen auf die Achse A1 abstehend befestigt, an dessen freien Ende eine doppelte Kniehebelanordnung 18 angelenkt ist. Diese weist einen zentralen, gemeinsamen, doppelarmigen Winkelhebel 19 auf, dessen einer Arm 20 über einen Lenker 21 mit dem Lenker 17 verbunden ist. Der zweite Arm 22 des Winkelhebels 19 ist über einen weiteren Lenker 23 mit einem Lagerbock 24 am Träger 3 der Hilfsantriebseinrichtung 1 gelenkig verbunden. Der Winkelhebel 19 selbst ist auf einem Lagerbock 25 am Lagerschlitten 4 schwenkbar befestigt.

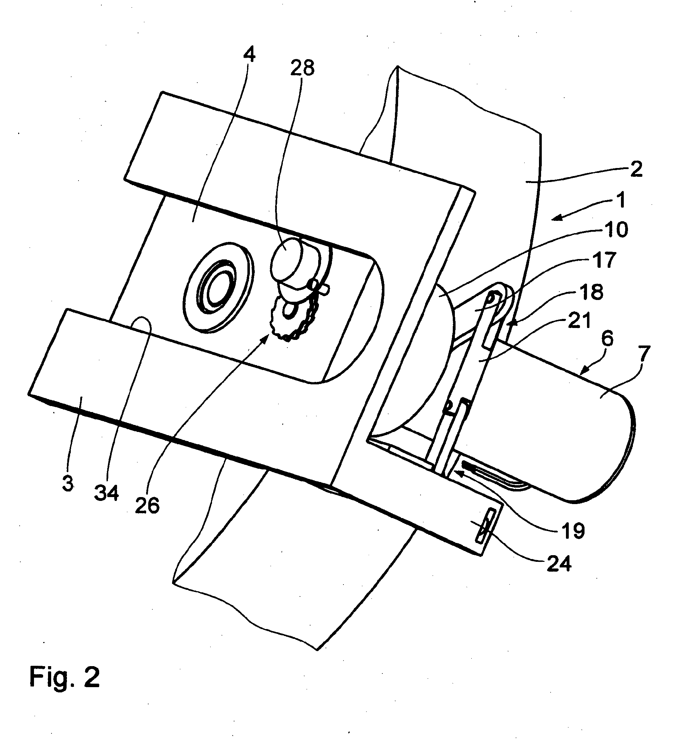

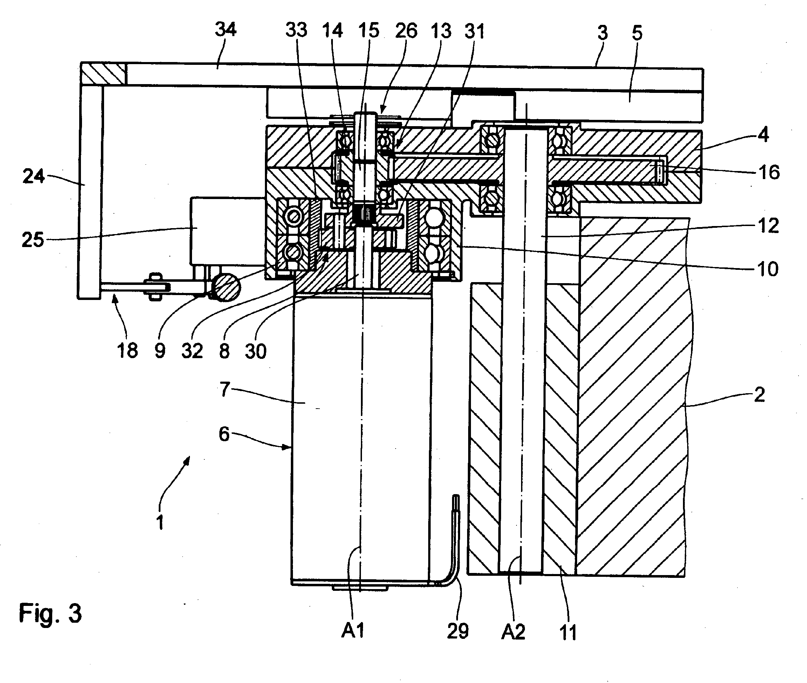

Wie aus Fig. 2 und 3 hervorgeht, ist auf dem Antriebsritzel 14 des Stirnradgetriebes 13 auf der dem Getriebemotor 6 abgewandten Seite des Lagerschlittens 4 in einer darin vorgesehenen zentralen Aussparung 34 eine Sperrritzelanordnung 26 drehfest aufgesetzt, die durch eine ausrückbare Sperrklinke 27 blockierbar ist. Die Betätigung der Sperrklinke 27 wird über einen kleinen Hubmagneten 28 bewerkstelligt, der über eine nicht näher dargestellte Steuerung der Hilfsantriebseinrichtung 1 aktivierbar ist.

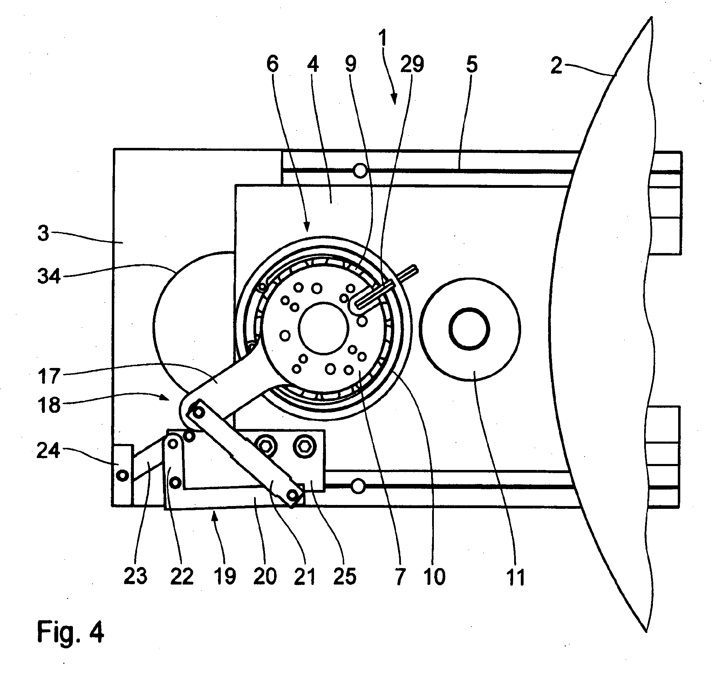

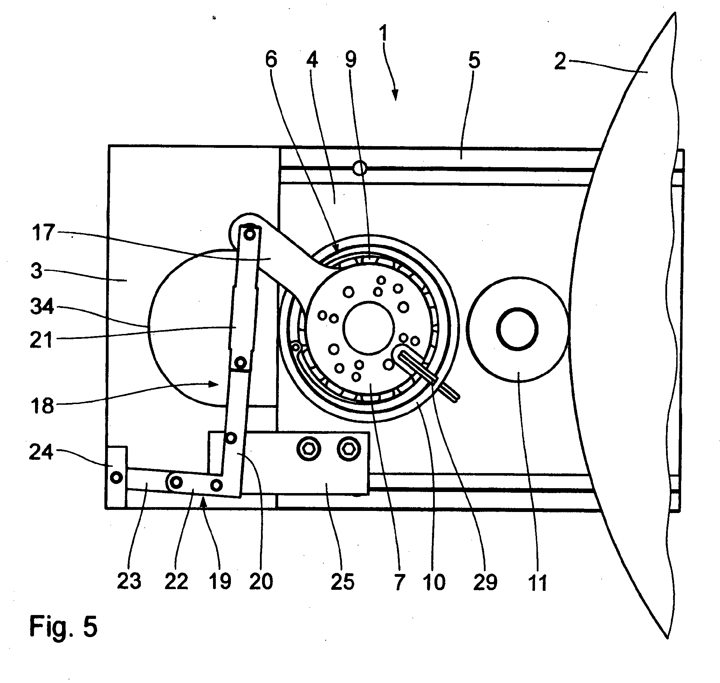

Die Funktionsweise der Hilfsantriebseinrichtung ist wie folgt zu erläutern:
Es wird ausgegangen von der in Fig. 4 gezeigten inaktiven Stellung der Hilfsantriebseinrichtung 1, in der der Lagerschlitten 4 zurückgezogen und die Reibrolle 11 damit in einen Abstand vom Rad 2 des Caravans steht. Zur Aktivierung der Hilfsantriebseinrichtung 1 wird der Getriebemotor 6 über die erwähnte, nicht näher dargestellte Steuerung beispielsweise mittels einer Fernbedienung in Betrieb gesetzt, indem er über die Anschlussleitung 29 bestromt wird. In der inaktiven Stellung befindet sich die Kniehebelanordnung 18 in ihrer eingeknickten Stellung, das heißt, die Lenker 21 und 23 stehen jeweils in einem spitzen Winkel zu den Armen 20 und 22 des Winkelhebels 19. Die Auslegung der Kniehebelposition sichert die in Fig. 4 gezeigte weggerückte Stellung der Antriebseinrichtung, so dass zusätzliche Maßnahmen dafür, wie Zugfedern oder mechanische Verriegelungen entfallen könne. Um die Zustellbewegung des Lagerschlittens 4 zum Rad 2 zu bewerkstelligen, wird die Sperrklinke 27 in ihre Eingriffsstellung in die Sperrritzelanordnung 26 verbracht, sodass sich das Antriebsritzel 14 des Stirnradgetriebes 13 nicht drehen kann. Die Drehbewegung des Antriebsritzels 30 des Elektromotors 7 wird auf das Planetengetriebe 8 übertragen, bei dem sich aufgrund der Sperrung des Antriebsritzels 14 auch das damit gekoppelte Trägerrad 31 für die Planetenräder 32 des Planetengetriebes 8 nicht drehen kann. Dies hat zur Folge, dass sich die Drehbewegung des Antriebsritzels 30 des Elektromotors 7 über die Planetenräder 32 auf das Hohlrad 33 des Planetengetriebes 8 überträgt, das sich somit innerhalb der Drehlageranordnung 9 im Uhrzeigersinn bezüglich Fig. 4 dreht. Entsprechend dreht sich der gesamte Getriebemotor 6 mit dem Lenker 17 in diese Richtung und die Kniehebelanordnung 18 wird von der in Fig. 4 gezeigten Stellung in die in Fig. 5 gezeigte Streckstellung übergeführt. Der durch den Arm 22 und den Lenker 21 der Kniehebelanordnung 18 gebildete Kniehebel streckt sich dadurch ebenfalls, stützt sich an dem trägerfesten Lagerbock 24 ab und schiebt damit den Lagerschlitten 4 in Richtung zum Rad 2 vor. Dadurch wird die Reibrolle 11 gegen das Rad 2 angepresst und aufgrund der gestreckten Konfiguration der Kniehebelanordnung 18 dort gehalten. Da eine weitere Schwenkbewegung des Getriebemotors in dieser Stellung nicht mehr durchgeführt werden kann, ist der Getriebemotor 6 statisch fixiert und es kann die Sperrritzelanordnung 26 durch Ausrücken der Sperrklinke 27 freigegeben werden. Damit wird auch das Stirnradgetriebe 13 freigegeben, wodurch die Reibrolle 11 vom Getriebemotor 6 über das Planetengetriebe 8 und das Stirnradgetriebe 13 in Drehbewegung versetzt wird. Es wird folglich das Rad 2 in eine gegenläufige Drehbewegung versetzt. Bei gleichförmiger Bewegung der beiden Reibrollen 11 der dem jeweiligen Rad 2 zugeordneten Hilfsantriebseinrichtung kann der Caravan damit in gerader Richtung bewegt, bei unterschiedlichen Drehzahlen der Reibrollen 11 können mit dem Caravan Kurvenradien gefahren oder bei gegensinnigem Antrieb der Reibrollen eine Drehung des Caravans auf der Stelle hervorgerufen werden.

Zum Wegrücken der Reibrolle 11 vom Rad 2 genügt es, über die Steuerung der Hilfsantriebseinrichtung die Sperrklinke 27 wieder in die Sperrritzelanordnung 26 eingreifen zu lassen. Der Getriebemotor 6 wird in Gegenrichtung angetrieben, womit wiederum über die Verschwenkung des Getriebemotors 6 in der Drehlageranordnung 9 die Kniehebelanordnung 18 in ihre eingeknickte Position gemäß Fig. 4 verbracht und der Lagerschlitten 4 weg vom Rad 2 gezogen wird.

## Patentansprüche

1. Hilfsantriebseinrichtung für antriebslose Fahrzeuganhänger, insbesondere Caravan-Rangierhilfe, umfassend
- einen am Anhänger im Bereich eines Rades (2) befestigbaren Träger (3),
- einen am Träger (3) verschiebbar gelagerten Lagerschlitten (4), und
- einen am Lagerschlitten (4) angeordneten Antriebsmotor (7), der über eine Getriebeanordnung (13) eine durch die Schlittenverschiebung zum Anhängerrad (2) zustellbare Reibrolle (11) für den Hilfsantrieb des Rades (2) rotatorisch antreibt,
- wobei der Antrieb für die Verschiebung des Lagerschlittens (4) zur Zustellung der Reibrolle (11) an das Anhängerrad (2) vom Antriebsmotor (7) über eine zweite, selektiv aktivierbare Getriebeanordnung (8) ableitbar ist,
- **dadurch gekennzeichnet, dass** der Antriebsmotor (7) und ein Planetengetriebe (8) als zweite Getriebeanordnung in einem Gehäuse (10) der ersten Getriebeanordnung (13) als Schwenkeinheit (6) drehbar gelagert sind, wobei bei Blockierung der ersten Getriebeanordnung (13) der Antriebsmotor (7) eine Schwenkbewegung dieser Schwenkeinheit (6) hervorruft, die in die Verschiebung des Lagerschlittens (4) zur Zustellung der Reibrolle (11) an das Anhängerrad (2) umsetzbar ist.

2. Hilfsantriebseinrichtung nach Anspruch 1, **dadurch gekennzeichnet, dass** die Schwenkeinheit (6) und der Lagerschlitten (4) über eine Kniehebelanordnung (18) miteinander gekoppelt sind, mit der die Schwenkbewegung der Schwenkeinheit (6) in eine lineare Verschiebung des Lagerschlittens (4) umsetzbar ist.

3. Hilfsantriebseinrichtung nach Anspruch 1 oder 2, **dadurch gekennzeichnet, dass** ein Hohlrad (33) des Planetengetriebes (8) mit dem daran befestigten Gehäuse des Antriebsmotors (7) in einer Drehlageraufnahme (10) am Lagerschlitten (4) schwenkbar gelagert ist.

4. Hilfsantriebseinrichtung nach Anspruch 2 oder 3, **dadurch gekennzeichnet, dass** die Kniehebelanordnung (18) eine doppelte Kniehebelanordnung mit einem zentralen gemeinsamen, doppelarmigen Winkelhebel (19) ausgebildet ist.

5. Hilfsantriebseinrichtung nach einem der vorgenannten Ansprüche, **dadurch gekennzeichnet, dass** die erste Getriebeanordnung ein Stirnradgetriebe (13) ist.

6. Hilfsantriebseinrichtung nach Anspruch 2 bis 5, **dadurch gekennzeichnet, dass** die Kniehebelanordnung (18) in der zum anzutreibenden Rad (2) zugestellten Position der Reibrolle (11) maximal in ihrer gestreckten Kniehebelkonfiguration steht.

7. Hilfsantriebseinrichtung nach einem der vorgenannten Ansprüche, **dadurch gekennzeichnet, dass** die selektive Aktivierung der zweiten Getriebeanordnung (8) durch eine Sperre (26, 27) in der ersten oder zweiten Getriebeanordnung (13, 8) erfolgt.

8. Hilfsantriebseinrichtung nach Anspruch 7 wenn von Anspruch 5 abhängig, **dadurch gekennzeichnet, dass** die Sperre (26, 27) im Stirnradgetriebe (13) durch ein drehfest mit der Abtriebswelle (15) des Planetengetriebes (8) gekoppeltes Sperrritzel (26) gebildet ist, das durch eine steuerbare Sperrklinke (27) blockierbar ist.

9. Hilfsantriebseinrichtung nach Anspruch 8, **dadurch gekennzeichnet, dass** die Sperrklinke (27) elektromagnetisch angesteuert ist.

## Claims

1. Auxiliary drive device for driveless vehicle trailers, in particular caravan manoeuvring system, comprising
- a support (3) which is securable to the trailer in the region of a wheel (2),
- a bearing carriage (4) which is displaceably mounted to the support (3), and
- a drive motor (7) arranged on the bearing carriage (4) which drives rotation of a friction roller (11) that is movable, via a gear arrangement (13) and by displacement of the carriage (4), in contact with the trailer wheel (2) for auxiliary drive of the wheel (2),
- wherein the drive required for displacing of the bearing carriage (4) in order to move the friction roller (11) in contact with the trailer wheel (2) is derivable from the drive motor (7) via a second, selectively actuable gear arrangement (8),
- **characterized in that** the drive motor (7) and a second gear arrangement in the form of a planetary gear (8) are mounted for rotation in a casing (10) of the first gear arrangement (13) in the form of a pivoting unit (6), wherein the drive motor (7) causes a pivoting movement of this pivoting unit (6) when the first gear arrangement (13) locks, which pivoting movement is convertible into the displacement of the bearing carriage (4) for moving the friction roller (11) in contact with the trailer wheel (2).

2. Auxiliary drive device according to claim 1, **characterized in that** the pivoting unit (6) and the bearing carriage (4) are coupled to each other via a knee-lever arrangement (18) which allows the pivoting movement of the pivot unit (6) to be converted into a linear displacement of the bearing carriage (4).

3. Auxiliary drive device according to claim 1 or 2, **characterized in that** a hollow wheel (33) of the planetary gear (8) together with the casing of the drive motor (7) secured thereto is pivotably mounted in a pivot bearing mount (10) of the bearing carriage (4).

4. Auxiliary drive device according to claim 2 or 3, **characterized in that** the knee-lever arrangement (18) is configured as a double knee-lever arrangement comprising a central common double-arm angular lever (19).

5. Auxiliary drive device according to one of the preceding claims, **characterized in that** the first gear arrangement is a spur gear (13).

6. Auxiliary drive device according to claims 2 to 5, **characterized in that** when the friction roller (11) has been moved in contact with the wheel (2) to be driven, the knee-lever arrangement (18) is in its maximum extended knee-lever configuration.

7. Auxiliary drive device according to one of the preceding claims, **characterized in that** the selective actuation of the second gear arrangement (8) is performed by a ratchet device (26, 27) in the first or second gear arrangement (13, 8).

8. Auxiliary drive device according to claim 7 if depending on claim 5, **characterized in that** the ratchet device (26, 27) in the spur gear (13) is formed by a ratchet wheel (26) which is mounted for co-rotation with the output shaft (15) of the planetary gear (8) and is lockable by means of an actuable pawl (27).

9. Auxiliary drive device according to claim 8, **characterized in that** the pawl (27) is actuated electromagnetically.

## Revendications

1. Dispositif d'entraînement auxiliaire destiné à une remorque de véhicule sans entraînement, en particulier, aide au stationnement d'une caravane, comprenant
- un support (3) pouvant être fixé sur la remorque au niveau d'une roue (2),
- un chariot (4) de réception, logé, en pouvant être déplacé, sur le support (3), et
- un moteur (7) d'entraînement, disposé sur le chariot (4) de réception, qui entraîne de manière rotative un galet de friction (11), pouvant être mis à contribution par le déplacement du chariot, en complément à la roue (2) de remorque, par l'intermédiaire d'un ensemble de transmission (13) pour l'entraînement auxiliaire de la roue (2),
- l'entraînement pour le déplacement du chariot (4) de réception pouvant être retransmis du moteur (7) d'entraînement par un second ensemble de transmission (8) pouvant être activé de manière sélective pour la mise en place du galet de friction (11) sur la roue (2) de remorque,
- **caractérisé en ce que** le moteur (7) d'entraînement et un engrenage planétaire (8), servant de second ensemble de transmission, sont disposés, en pouvant être mis en rotation, dans un carter (10) du premier ensemble de transmission (13) servant d'ensemble pivotant (6), où, dans le cas du blocage du premier ensemble de transmission (13), le moteur (7) d'entraînement provoque un mouvement de pivotement de cet ensemble pivotant (6), lequel peut être transmis au déplacement du chariot (4) de réception pour la mise en place du galet de friction (11) sur la roue (2) de remorque.

2. Dispositif d'entraînement auxiliaire selon la revendication 1, **caractérisé en ce que** l'ensemble pivotant (6) et le chariot (4) de réception sont couplés l'un à l'autre par un système de levier à genouillère (18), grâce auquel le mouvement de pivotement de l'ensemble pivotant (6) peut être transformé en un déplacement linéaire du chariot (4) de réception.

3. Dispositif d'entraînement auxiliaire selon les revendications 1 ou 2, **caractérisé en ce qu'**une couronne (33) de l'engrenage planétaire (8), avec le carter du moteur (7) d'entraînement qui y est fixé, est disposée, en pouvant pivoter, sur le chariot (4) de réception, prenant la configuration d'un logement (10) de couronne d'orientation.

4. Dispositif d'entraînement auxiliaire selon les revendications 2 ou 3, **caractérisé en ce que** le système de levier à genouillère (18) est conçu sous la forme d'un système de levier à genouillère double comprenant un levier coudé (19) central commun, à deux bras.

5. Dispositif d'entraînement auxiliaire selon l'une des revendications précitées, **caractérisé en ce que** le premier ensemble de transmission est une transmission à engrenage cylindrique (13).

6. Dispositif d'entraînement auxiliaire selon les revendications 2 à 5, **caractérisé en ce que** le système de levier à genouillère (18) est placé au maximum de la configuration en extension du levier à genouillère dans la position du galet de friction (11) mis en place en complément à la roue (2) à entraîner.

7. Dispositif d'entraînement auxiliaire selon l'une des revendications précitées, **caractérisé en ce que** l'activation sélective du second ensemble de transmission (8) est effectuée par un système de blocage (26, 27) dans le premier ou le second ensemble de transmission (13, 8).

8. Dispositif d'entraînement auxiliaire selon la revendication 7, lorsqu'elle est dépendante de la revendication 5, **caractérisé en ce que** le système de blocage (26, 27) dans la transmission à engrenage cylindrique (13) est formé par un pignon (26) de blocage couplé avec l'arbre de sortie (15) de l'engrenage planétaire (8), en ne pouvant pas tourner, pignon qui peut être bloqué par un cliquet (27) de verrouillage pouvant être commandé.

9. Dispositif d'entraînement auxiliaire selon la revendication 8, **caractérisé en ce que** le cliquet (27) de verrouillage est commandé de manière électromagnétique.
